# EUROPEAN PATENT APPLICATION

(11) **EP 4 841 393 A1**
(43) Date of publication of application: **18.11.2026**
(21) Application number: 26177547.2
(22) Date of filing: 08.05.2026
(51) Int. Cl.: G06F 1/26, H02J 7/00, H02J 7/34

(54) **BIDIRECTIONAL BLIND-MATE POWER SUPPLY WITH DATA TRANSMISSION DEVICE OF MEMORY DEVICE AND CONTROLLER THEREOF**

(30) Priority: 16.05.2025 TW 114118566
(71) Applicant: Chang, Calvinson, Alhambra, CA 91803 (US)
(72) Inventor: Chang, Calvinson, Alhambra, CA 91803 (US)
(74) Representative: Becker, Eberhard

(57) **Abstract**

A bidirectional blind-mate power supply with data transmission device (1) comprises: a first connection port (20) and a second connection port (30), a memory device connection interface (16), a first main control unit (10) connected to the first and second connection ports (20, 30), and the memory device connection interface (16) respectively, and a bidirectional power supply control unit (40) connected to the main control unit (10); wherein when the memory device connection interface (16) is connected to a memory device (50), the first connection port (20) is connected to a mobile communication device or a power supply device, and the second connection port (30) is connected to another mobile communication device or another power supply device, the bidirectional power supply control unit (40) controls the power supply of the power supply device or said another power supply device, and controls the power supply and data access of the mobile communication device or said another mobile communication device to the memory device (50), thereby achieving purposes of the present invention.

## Description

The present invention relates to the technical field of portable memory device power supply devices, and in particular to a bidirectional blind-mate power supply with data transmission device for a memory device and controller thereof.

Currently, mobile phones have a wide variety of functions and the number of applications used in them is increasing day by day. Therefore, the demand for the memory capacity of the mobile phone is also increasing day by day. As a result, portable memory devices that are externally connected to mobile phones are used very often. Currently, a portable memory device externally connected to a mobile phone via a cable can be integrated with the mobile phone to access data and to get electric power from the mobile phone. However, due to limited connection ports of the mobile phone, the mobile phone cannot be connected to an external power source for charging at the same time. In order to solve the above problem, the portable memory device needs to be modified.

In view of the above problems, the present invention provides a bidirectional blind-mate power supply with data transmission device, which enables a mobile phone to be connected to an external charging device for charging while accessing data with an external memory device. The bidirectional blind-mate power supply with data transmission device of the present invention comprises:
a first connection port (20), the first connection port (20) having a pair of first sub-ports (G1_1, G2_1);
a second connection port (30), the second connection port (30) having a pair of second sub-ports (G1_2, G2_2);
a memory device connection interface (16);
a first main control unit (10), connected to the first connection port (20), the second connection port (30), and the memory device connection interface (16), respectively; and
a bidirectional power supply control unit (40), the bidirectional power supply control unit (40) connected to the first main control unit (10) and configured to receive configuration channel signals (CC1_1, CC2_1) of the first connection port (20) and configuration channel signals (CC1_2, CC2_2) of the second connection port (30) respectively; wherein
when the memory device connection interface (16) is connected to a memory device (50), and the first connection port (20) is connected to either a mobile communication device or a power supply device, and the second connection port (30) is connected to either another mobile communication device or another power supply device, the bidirectional power supply control unit (40) controls the first main control unit (10) according to the configuration channel signals (CC1_1, CC2_1) of the first connection port (20) and the configuration channel signals (CC1_2, CC2_2) of the second connection port (30), so as to control the power supply device to supply power to the memory device (50) and said another mobile communication device, the mobile communication device to access data from the memory device (50) and at the same time said another mobile communication device to supply power to the memory device (50) and the mobile communication device, said another mobile communication device to access data from the memory device (50) and at the same time the mobile communication device to supply power to the memory device (50) and said another mobile communication device, or said another power supply device to supply power to the memory device (50) and the mobile communication device.

In one embodiment, the bidirectional blind-mate power supply with data transmission device of the present invention comprises:
a first connection port (20), the first connection port (20) having a pair of first sub-ports (G1_1, G2_1);
a second connection port (30), the second connection port (30) having a pair of second sub-ports (G1_2, G2_2);
a memory device connection interface (16);
a first main control unit (10), connected to the first connection port (20), the second connection port (30), and the memory device connection interface (16), respectively; and
a bidirectional power supply control unit (40), the bidirectional power supply control unit (40) connected to the first main control unit (10) and configured to receive configuration channel signals (CC1_1, CC2_1) of the first connection port (20) and configuration channel signals (CC1_2, CC2_2) of the second connection port (30) respectively; wherein
when the memory device connection interface (16) is connected to a memory device (50), and only one power supply device is connected to either the first connection port (20) or the second connection port (30), the bidirectional power supply control unit (40) controls the first main control unit (10) based on the configuration channel signals (CC1_1, CC2_1) of the first connection port (20) and the configuration channel signals (CC1_2, CC2_2) of the second connection port (30) to control the power supply device to supply power to the memory device (50).

In one embodiment, the bidirectional blind-mate power supply with data transmission device of the present invention comprises:
a first connection port (20), the first connection port (20) having a pair of first sub-ports;
a second connection port (30), the second connection port (30) having a pair of second sub-ports;
a memory device connection interface (16);
a first main control unit (10), connected to the first connection port (20), the second connection port (30), and the memory device connection interface (16), respectively; and
a bidirectional power supply control unit (40), the bidirectional power supply control unit (40) connected to the first main control unit (10) and configured to receive configuration channel signals (CC1_1, CC2_1) of the first connection port (20) and configuration channel signals (CC1_2, CC2_2) of the second connection port (30) respectively;
when the memory device connection interface (16) is connected to a memory device (50), and only one mobile communication device is connected to either the first connection port (20) or the second connection port (30), the bidirectional power supply control unit (40) controls the first main control unit (10) based on the configuration channel signals (CC1_1, CC2_1) of the first connection port (20) and the configuration channel signals (CC1_2, CC2_2) of the second connection port (30) to control the mobile communication device to supply power to and/or access data from the memory device (50).

In one embodiment, the bidirectional blind-mate power supply with data transmission device of the present invention comprises:
a first connection port (20), the first connection port (20) having a pair of first sub-ports (G1a, G1b);
a second connection port (30), the second connection port (30) having a pair of second sub-ports (G2a, G2b);a memory device connection interface (16);
a first signal selector (21), one end of which is connected to the first connection port (20);
a second signal selector (31), one end of which is connected to the second connection port (30);
a second main control unit (15) having a left first sub-port (G1_1) and a right first sub-port (G1_2), the second main control unit (15) connected to the memory device connection interface (16), the left first sub-port (G1_1) of the second main control unit (15) connected to another end of the first signal selector (21), and the right first sub-port (G1_2) of the second main control unit (15) connected to another end of the second signal selector (31); and
a bidirectional power supply control unit (40), the bidirectional power supply control unit (40) connected to the second main control unit (15), the first connection port (20), the second connection port (30), the first signal selector (21), and the second signal selector (31), and configured to receive configuration channel signals (CC1_1, CC2_1) of the first connection port (20) and configuration channel signals (CC1_2, CC2_2) of the second connection port (30), so as to control the first signal selector (21) so that the left first sub-port (G1_1) of the second main control unit (15) is selectively connectable to any first sub-port of the pair of first sub-ports (G1a, G1b) of the first connection port (20), and to control the second signal selector (31) so that the right first sub-port (G1_2) of the second main control unit (15) is selectively connectable to any second sub-port of the pair of second sub-ports (G2a, G2b) of the second connection port (30); wherein
when the memory device connection interface (16) is connected to a memory device (50), and the first connection port (20) is connected to either a mobile communication device or a power supply device, and the second connection port (30) is connected to either another mobile communication device or another power supply device, the bidirectional power supply control unit (40) controls the second main control unit (15) according to the configuration channel signals (CC1_2, CC2_2) of the first connection port (20) and the configuration channel signals (CC1_2, CC2_2) of the second connection port (30), thereby controlling:
   the power supply device to supply power to the memory device (50) and said another mobile communication device;
   the mobile communication device to access data from the memory device (50), and said another mobile communication device to supply power to the memory device (50) and the mobile communication device;
   said another mobile communication device to access data from the memory device (50), and the mobile communication device to supply power to the memory device (50) and said another mobile communication device; or
   said another power supply device to supply power to the memory device (50) and the mobile communication device.

In one embodiment, the bidirectional blind-mate power supply with data transmission device of the present invention comprises:
a first connection port (20), the first connection port (20) having a pair of first sub-ports (G1a, G1b);
a second connection port (30), the second connection port (30) having a pair of second sub-ports (G2a, G2b);
a memory device connection interface (16);
a first signal selector (21), one end of which is connected to the first connection port (20);
a second signal selector (31), one end of which is connected to the second connection port (30);
a second main control unit (15) having a left first sub-port (G1_1) and a right first sub-port (G1_2), the second main control unit (15) connected to the memory device connection interface (16), the left first sub-port (G1_1) of the second main control unit (15) connected to another end of the first signal selector (21), and the right first sub-port (G1_2) of the second main control unit (15) connected to another end of the second signal selector (31); and
a bidirectional power supply control unit (40), the bidirectional power supply control unit (40) connected to the second main control unit (15), the first connection port (20), the second connection port (30), the first signal selector (21), and the second signal selector (31), and configured to receive configuration channel signals (CC1_1, CC2_1) of the first connection port (20) and configuration channel signals (CC1_2, CC2_2) of the second connection port (30), so as to control the first signal selector (21) so that the left first sub-port (G1_1) of the second main control unit (15) is selectively connectable to any first sub-port of the pair of first sub-ports (G1a, G1b) of the first connection port (20), and to control the second signal selector (31) so that the right first sub-port (G1_2) of the second main control unit (15) is selectively connectable to any second sub-port of the pair of second sub-ports (G2a, G2b) of the second connection port (30); wherein
when the memory device connection interface (16) is connected to a memory device (50), and a power supply device is the only device connected to either the first connection port (20) or the second connection port (30), the bidirectional power supply control unit (40) controls the second main control unit (15) according to the configuration channel signals (CC1_2, CC2_2) of the first connection port (20) and the configuration channel signals (CC1_2, CC2_2) of the second connection port (30) so as to control the power supply device to supply power to the memory device (50).

In one embodiment, the bidirectional blind-mate power supply with data transmission device of the present invention comprises:
a first connection port (20), the first connection port (20) having a pair of first sub-ports (G1a, G1b);
a second connection port (30), the second connection port (30) having a pair of second sub-ports (G2a, G2b);
a memory device connection interface (16);
a first signal selector (21), one end of which is connected to the first connection port (20);
a second signal selector (31), one end of which is connected to the second connection port (30);
a second main control unit (15) having a left first sub-port (G1_1) and a right first sub-port (G1_2), the second main control unit (15) connected to the memory device connection interface (16), the left first sub-port (G1_1) of the second main control unit (15) connected to another end of the first signal selector (21), and the right first sub-port (G1_2) of the second main control unit (15) connected to another end of the second signal selector (31); and
a bidirectional power supply control unit (40), the bidirectional power supply control unit (40) connected to the second main control unit (15), the first connection port (20), the second connection port (30), the first signal selector (21), and the second signal selector (31), and configured to receive configuration channel signals (CC1_1, CC2_1) of the first connection port (20) and configuration channel signals (CC1_2, CC2_2) of the second connection port (30), thereby controlling the first signal selector (21) so that the left first sub-port (G1_1) of the second main control unit (15) is selectively connectable to either first sub-port of the pair of first sub-ports (G1a, G1b) of the first connection port (20), and controlling the second signal selector (31) so that the right first sub-port (G1_2) of the second main control unit (15) is selectively connectable to either second sub-port of the pair of second sub-ports (G2a, G2b) of the second connection port (30); wherein
when the memory device connection interface (16) is connected to a memory device (50) and a mobile communication device is the only device connected to either the first connection port (20) or the second connection port (30), the bidirectional power supply control unit (40) controls the second main control unit (15) according to the configuration channel signals (CC1_2, CC2_2) of the first connection port (20) and the configuration channel signals (CC1_2, CC2_2) of the second connection port (30) so as to control the mobile communication device to supply power to or/and access data from the memory device (50).

In one embodiment, the bidirectional blind-mate power supply with data transmission device of the present invention comprises:
a first connection port (20), the first connection port (20) having a pair of first sub-ports (G1a, G1b);
a second connection port (30), which only has a second sub-port (G2a);
a memory device connection interface (16);
a first signal selector (21), one end of which is connected to the first connection port (20);
a second main control unit (15), connected to the second connection port (30), the memory device connection interface (16), and another end of the first signal selector (21) respectively; and
a bidirectional power supply control unit (40), the bidirectional power supply control unit (40) connected to the second main control unit (15) and configured to receive configuration channel signals (CC1_1, CC2_1) of the first connection port (20) and a configuration channel signal (CC1_2) of the second connection port (30) respectively; wherein
when the memory device connection interface (16) is connected to a memory device (50), and the first connection port (20) is connected to either a mobile communication device or a power supply device, and the second connection port (30) is connected to either another mobile communication device or another power supply device, the bidirectional power supply control unit (40) controls the second main control unit (15) according to the configuration channel signals (CC1_1, CC2_1) of the first connection port (20) and the configuration channel signal (CC1_2) of the second connection port (30), thereby controlling:
   the power supply device to supply power to the memory device (50) and said another mobile communication device;
   the mobile communication device to access data from the memory device (50), and said another mobile communication device to supply power to the memory device (50) and the mobile communication device;
   said another mobile communication device to access data from the memory device (50), and the mobile communication device to supply power to the memory device (50) and said another mobile communication device; or
   said another power supply device to supply power to the memory device (50) and the mobile communication device.

In one embodiment the bidirectional blind-mate power supply with data transmission device of the present invention comprises:
a first connection port (20), the first connection port (20) having a pair of first sub-ports (G1a, G1b);
a second connection port (30), which only has a second sub-port (G2a);
a memory device connection interface (16);
a first signal selector (21), one end of the first signal selector (21) connected to the first connection port (20);
a second main control unit (15) connected to the second connection port (30), the memory device connection interface (16), and another end of the first signal selector (21), respectively; and
a bidirectional power supply control unit (40), the bidirectional power supply control unit (40) connected to the second main control unit (15) and configured to receive configuration channel signals (CC1_1, CC2_1) of the first connection port (20) and a configuration channel signal (CC1_2) of the second connection port (30) respectively; wherein
when the memory device connection interface (16) is connected to a memory device (50) and a power supply device is the only device connected to either the first connection port (20) or the second connection port (30), the bidirectional power supply control unit (40) controls the second main control unit (15) according to the configuration channel signals (CC1_1, CC2_1) of the first connection port (20) and the configuration channel signal (CC1_2) of the second connection port (30) so as to control the power supply device to supply power to the memory device (50).

In one embodiment, the bidirectional blind-mate power supply with data transmission device of the present invention comprises:
a first connection port (20), the first connection port (20) having a pair of first sub-ports (G1a, G1b);
a second connection port (30), which only has a second sub-port (G2a);
a memory device connection interface (16);
a first signal selector (21), one end of the first signal selector (21) connected to the first connection port (20);
a second main control unit (15) connected to the second connection port (30), the memory device connection interface (16), and another end of the first signal selector (21), respectively; and
a bidirectional power supply control unit (40), the bidirectional power supply control unit (40) connected to the second main control unit (15) and configured to receive configuration channel signals (CC1_1, CC2_1) of the first connection port (20) and a configuration channel signal (CC1_2) of the second connection port (30) respectively; wherein
when the memory device connection interface (16) is connected to a memory device (50) and a mobile communication device is the only device connected to either the first connection port (20) or the second connection port (30), the bidirectional power supply control unit (40) controls the second main control unit (15) according to the configuration channel signals (CC1_1, CC2_1) of the first connection port (20) and the configuration channel signal (CC1_2) of the second connection port (30) so as to control the mobile communication device to supply power to and/or access data from the memory device (50).

In one embodiment, the bidirectional blind-mate power supply with data transmission device of the present invention comprises:
a first connection port (20) having a first sub-port (G1a);
a second connection port (30), which only has a second sub-port (G2a);
a memory device connection interface (16);
a second main control unit (15), connected to the first connection port (20), the second connection port (30), and the memory device connection interface (16), respectively; and
a bidirectional power supply control unit (40), the bidirectional power supply control unit (40) connected to the second main control unit (15) and configured to receive a configuration channel signal (CC1_1) of the first connection port (20) and a configuration channel signal (CC1_2) of the second connection port (30) respectively; wherein
when the memory device connection interface (16) is connected to a memory device (50), and the first connection port (20) is connected to either a mobile communication device or a power supply device, and the second connection port (30) is connected to either another mobile communication device or another power supply device, the bidirectional power supply control unit (40) controls the second main control unit (15) according to the configuration channel signal (CC1_1) of the first connection port (20) and the configuration channel signal (CC1_2) of the second connection port (30), thereby controlling:
   the power supply device to supply power to the memory device (50) and the other mobile communication device;
   the mobile communication device to access data from the memory device (50), and said another mobile communication device to supply power to the memory device (50) and the mobile communication device;
   said another mobile communication device to access data from the memory device (50), and the mobile communication device to supply power to the memory device (50) and the other mobile communication device; or
   the other power supply device to supply power to the memory device (50) and the mobile communication device.

In one embodiment, the bidirectional blind-mate power supply with data transmission device of the present invention comprises:
a first connection port (20) having a first sub-port (G1a);
a second connection port (30), which only has a second sub-port (G2a);
a memory device connection interface (16);
a second main control unit (15), connected to the first connection port (20), the second connection port (30), and the memory device connection interface (16), respectively; and
a bidirectional power supply control unit (40), the bidirectional power supply control unit (40) connected to the second main control unit (15) and configured to receive a configuration channel signal (CC1_1) of the first connection port (20) and a configuration channel signal (CC1_2) of the second connection port (30) respectively; wherein
when the memory device connection interface (16) is connected to a memory device (50) and a power supply device is the only device connected to either the first connection port (20) or the second connection port (30), the bidirectional power supply control unit (40) controls the second main control unit (15) according to the configuration channel signal (CC1_1) of the first connection port (20) and the configuration channel signal (CC1_2) of the second connection port (30) to control the power supply device to supply power to the memory device (50).

In one embodiment, the bidirectional blind-mate power supply with data transmission device of the present invention comprises:
a first connection port (20) having a first sub-port (G1a);
a second connection port (30), which only has a second sub-port (G2a);
a memory device connection interface (16);
a second main control unit (15), connected to the first connection port (20), the second connection port (30), and the memory device connection interface (16), respectively; and
a bidirectional power supply control unit (40), the bidirectional power supply control unit (40) connected to the second main control unit (15) and configured to receive a configuration channel signal (CC1_1) of the first connection port (20) and a configuration channel signal (CC1_2) of the second connection port (30) respectively; wherein
when the memory device connection interface (16) is connected to a memory device (50), and a mobile communication device is the only device connected to either the first connection port (20) or the second connection port (30), the bidirectional power supply control unit (40) controls the second main control unit (15) according to the configuration channel signal (CC1_1) of the first connection port (20) and the configuration channel signal (CC1_2) of the second connection port (30) so as to control the mobile communication device to supply power to or/and access data from the memory device (50).

In one embodiment, a controller of a bidirectional blind-mate power supply with data transmission device of the present invention comprises:
a main control unit, the main control unit being used to connect to a first connection port (20), a second connection port (30), and a memory device connection interface (16);
a bidirectional power supply control unit (40), the bidirectional power supply control unit (40) connected to the main control unit, and the bidirectional power supply control unit (40) being used to receive configuration channel signals of the first connection port (20) and configuration channel signals of the second connection port (30) respectively; wherein
the memory device connection interface (16) is used to connect a memory device (50), the first connection port (20) is used to connect with a mobile communication device or a power supply device, and the second connection port (30) is used to connect with another mobile communication device or another power supply device; wherein
the main control unit also includes: a first switch (11) and a second switch (12) connected in series, the two ends of the first switch (11) and the second switch (12) connected in series are used to connect to a power terminal in the first connection port (20) and a power terminal in the second connection port (30) respectively;
when the first connection port (20) is connected to the mobile communication device or the power supply device, the bidirectional power supply control unit (40) controls the turn-on of the first switch (11) according to the configuration channel signals of the first connection port (20);
when the second connection port (30) is connected to said another mobile communication device or said another power supply device, the bidirectional power supply control unit (40) controls the turn-on of the second switch (12) according to the configuration channel signals of the second connection port (30); wherein
the main control unit and the bidirectional power supply control unit (40) are integrated into one chip, and the memory device connection interface (16) is a part of the main control unit.

In order to make the above objects, features and advantages of the present invention more apparent and easier to understand, the following embodiments, together with the accompanying drawings, are described in detail as follows.

### IN THE DRAWINGS:

FIG. 1 illustrates a functional block diagram of an embodiment of a bidirectional blind-mate power supply with data transmission device of the present invention;
FIG. 2 illustrates a functional block diagram of a main control unit of the bidirectional blind-mate power supply with data transmission device of the present invention;
FIG. 3 illustrates a functional block diagram of another embodiment of the bidirectional blind-mate power supply with data transmission device of the present invention;
FIG. 4 illustrates a functional block diagram of another main control unit of the bidirectional blind-mate power supply with data transmission device of the present invention;
FIG. 5 illustrates a functional block diagram of yet another embodiment of a bidirectional blind-mate power supply with data transmission device of the present invention;
FIG. 6 illustrates a functional block diagram of still another embodiment of the bidirectional blind-mate power supply with data transmission device of the present invention; and
FIG. 7 illustrates a schematic diagram of a bidirectional blind-mate power supply with data transmission device of the present invention combined with a mobile phone.

The technical contents, features and effects of the present invention will be clearly presented in the following detailed description of the preferred embodiment with reference to the drawings. In addition, the directional terms mentioned in the following embodiments, such as: up, down, left, right, front, back, bottom, top, etc., are only relative directions with reference to the drawings, and do not represent absolute directional positions; therefore, the directional terms used are for the convenience of illustrating their relative positional relationships, and are not intended to impose limitations on the present invention.

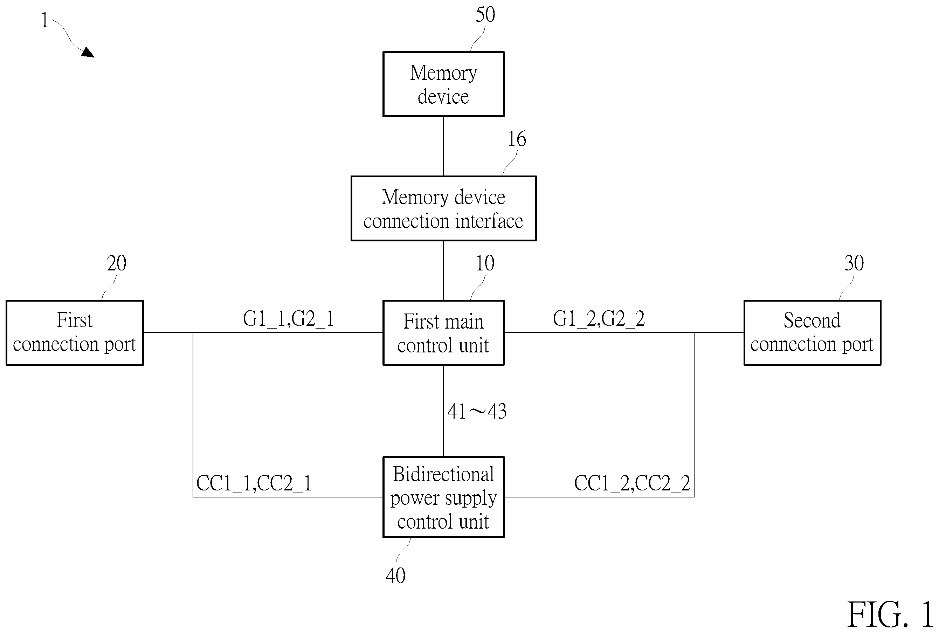

Referring to FIG. 1, FIG. 1 illustrates a functional block diagram of an embodiment of a bidirectional blind-mate power supply with data transmission device 1 of the present invention. The bidirectional blind-mate power supply with data transmission device 1 of the present invention comprises a first main control unit 10, a first connection port 20 connected to the first main control unit 10, a second connection port 30 connected to the first main control unit 10, a memory device connection interface 16, and a bidirectional power supply control unit 40 connected to the first main control unit 10, the first connection port 20, and the second connection port 30, respectively. In one embodiment, a memory device 50 is connected to the first main control unit 10 via the memory device connection interface 16. The memory device 50 may be a solid-state drive (SSD) or flash memory. The memory device connection interface 16 may be an interface compatible with the SATA specification, NVMe specification, eMMC specification, UFS specification, SD specification, or flash memory specification.

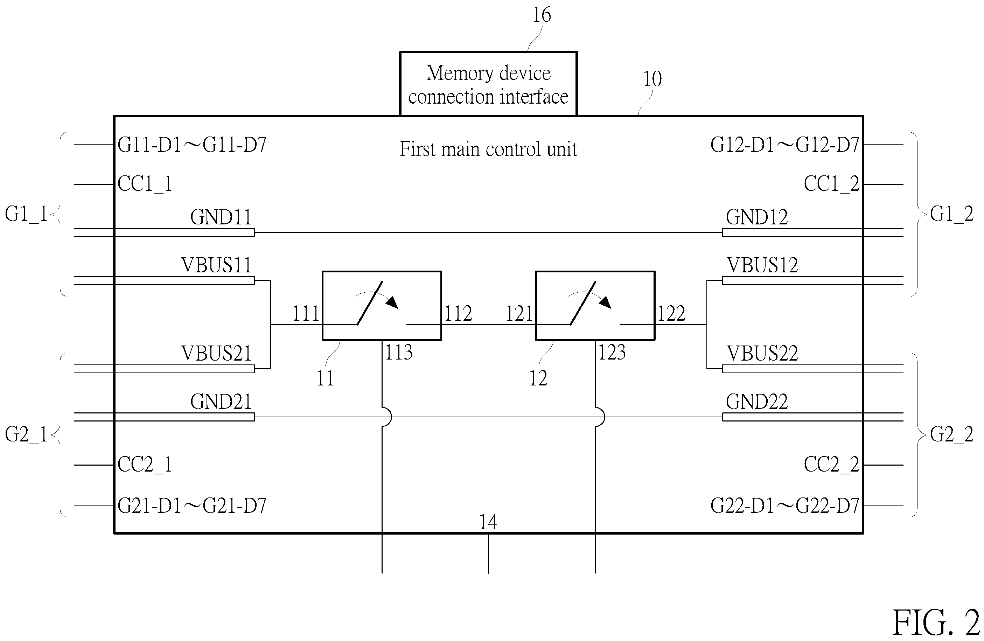

Please refer to FIG. 2, which is a functional block diagram of a first main control unit 10 of the bidirectional blind-mate power supply with data transmission device 1 of the present invention. In one embodiment, the first connection port 20 and the second connection port 30 each have a 24-pin USB TYPE-C connection port, that is, the first connection port 20 has two independent 12-pin USB TYPE-C sub-ports: left first sub-port G1_1 and left second sub-port G2_1, and the second connection port 30 has two independent 12-pin USB TYPE-C sub-ports: right first sub-port G1_2 and right second sub-port G2_2, wherein the left first sub-port G1_1 has a configuration channel (Configuration Channel) CC1_1, two power pins VBUS11, two ground pins GND11, and seven other pins G11-D1~G11-D7 (including USB2.0 DATA PAIR D-/D+, high-speed data pair TX-/TX+, high-speed data pair RX-/RX+, and audio sideband SBU), and the left second sub-port G2_1 has a configuration channel (Configuration Channel) CC2_1, two power pins VBUS21, two ground pins GND21, and seven other pins G21-D1∼G21-D7 (including USB2.0 DATA PAIR D-/D+, high-speed data pair TX-/TX+, high-speed data pair RX-/RX+, and audio sideband SBU), and the right first sub-port G1_2 has a configuration channel (Configuration Channel) CC1_2, two power pins VBUS12, two ground pins GND12, and seven other pins G12-D1~G12-D7 (including USB2.0 DATA PAIR D-/D+, high-speed data pair TX-/TX+, high-speed data pair RX-/RX+, and audio sideband SBU), and the right second sub-port G2_2 has a configuration channel (Configuration Channel) CC2_2, two power pins VBUS22, two ground pins GND22, and seven other pins G22-D1~G22-D7 (including USB2.0 DATA PAIR D-/D+, high-speed data pair TX-/TX+, high-speed data pair RX-/RX+, and audio sideband SBU).

As described above, the first main control unit 10 further comprises a first switch 11 and a second switch 12 connected in series, the power pin VBUS11 of the left first sub-port G1_1 and the power pin VBUS21 of the left second sub-port G2_1 are commonly connected to a first end 111 of the first switch 11, a second end 112 of the first switch 11 is connected to a first end 121 of the second switch 12, and a second end 122 of the second switch 12 is connected to the power pin VBUS 12 of the right first sub-port G1_2 and the power pin VBUS22 of the right second sub-port G2_2, wherein the first switch 11 has a first control terminal 113 for controlling whether the first end 111 and the second end 112 of the first switch 11 are conductively connected, and the second switch 12 has a second control terminal 123 for controlling whether the first end 121 and the second end 122 of the second switch 12 are conductively connected. In one embodiment, when the first switch 11 and the second switch 12 are both turned on, the power pins VBUS11, VBUS21, VBUS12, and VBUS22 of the left first sub-port G1_1, the left second sub-port G2_1, the right first sub-port G1_2, and the right second sub-port G2_2 are connected together.

Please refer to Figures 1 and 2. In one embodiment, the bidirectional power supply control unit 40 has a first control signal pin 41 connected to the first control terminal 113 of the first switch 11, and the bidirectional power supply control unit 40 has a second control signal pin 42 connected to the second control terminal 123 of the second switch 12; the bidirectional power supply control unit 40 is connected to the configuration channel signals CC1_1 and CC2_1 of the first connection port 20, as well as to the configuration channel signals CC1_2 and CC2_2 of the second connection port 30; the bidirectional power supply control unit 40 determines how to control the output of the first control signal pin 41 according to the configuration channel signals CC1_1 and CC2_1 transmitted from the first connection port 20 to control whether the first switch 11 is turned on or not via the first control terminal 113, and the bidirectional power supply control unit 40 determines how to control the output of the second control signal pin 42 according to the configuration channel signals CC1_2 and CC2_2 transmitted from the second connection port 30 to control whether the second switch 12 is turned on or not via the second control terminal 123. The bidirectional power supply control unit 40 also determines whether the first connection port 20 is connected to an external device first or the second connection port 30 is connected to another external device first according to the configuration channel signals CC1_1 and CC2_1 transmitted from the first connection port 20 and the configuration channel signals CC1_2 and CC2_2 transmitted from the second connection port 30, and then outputs a timing signal notification to a timing sequence pin 14 of the first main control unit 10 via a timing sequence signal pin 43 of the bidirectional power supply control unit 40, so as to inform the first main control unit 10 about which of the first connection port 20 and the second connection port 30 is connected to their respective external device first.

In one embodiment, when the memory device connection interface 16 is connected to the memory device 50, and the first connection port 20 is connected to either a mobile communication device or a power supply device, and the second connection port 30 is connected to the other one of the mobile communication device or the power supply device, the bidirectional power supply control unit 40 controls the first main control unit 10 according to the configuration channel signals CC1_1 and CC2_1 of the first connection port 20 and the configuration channel signals CC1_2 and CC2_2 of the second connection port 30, so as to control the power supply device to supply power to the memory device 50 and the mobile communication device, and the mobile communication device to access data from the memory device 50.

In one embodiment, when the memory device connection interface 16 is connected to the memory device 50, and a mobile communication device is connected to the first connection port 20, and another mobile communication device is connected to the second connection port 30, the bidirectional power supply control unit control unit 40 controls the first main control unit 10 according to the configuration channel signals CC1_1 and CC2_1 of the first connection port 20 and the configuration channel signals CC1_2 and CC2_2 of the second connection port 30 so as to control: when the mobile communication device is connected to the first connection port 20 earlier than said another mobile communication device is connected to the second connection port 30, the mobile communication device supplies power to or/and accesses data to the memory device 50, and said another mobile communication device supplies power to the memory device 50 and the mobile communication device; when said another mobile communication device is connected to the second connection port 30 earlier than the mobile communication device is connected to the first connection port 20, said another mobile communication device supplies power to or/and accesses data to the memory device 50, and the mobile communication device supplies power to the memory device 50 and said another mobile communication device.

In one embodiment, when the memory device connection interface 16 is connected to the memory device 50 and only one power supply device is connected to either the first connection port 20 or the second connection port 30, the bidirectional power supply control unit control unit 40 controls the first main control unit 10 according to the configuration channel signals CC1_1 and CC2_1 of the first connection port 20 and the configuration channel signals CC1_2 and CC2_2 of the second connection port 30 so as to control the power supply device to supply power to the memory device 50.

In one embodiment, when the memory device connection interface 16 is connected to a memory device 50 and only one mobile communication device is connected to either the first connection port 20 or the second connection port 30, the bidirectional power supply control unit control unit 40 controls the first main control unit 10 according to the configuration channel signals CC1_1 and CC2_1 of the first connection port 20 and the configuration channel signals CC1_2 and CC2_2 of the second connection port 30, so as to control the mobile communication device to provide power and/or data access to the memory device 50.

In one embodiment, the bidirectional power supply control unit 40 generates and outputs a port status to the first main control unit 10 according to the configuration channel signals CC1_1 and CC2_1 of the first connection port 20 and the configuration channel signals CC1_2 and CC2_2 of the second connection port 30. The port status includes: whether the first connection port 20 is connected to a mobile communication device or a power supply, whether the second connection port 30 is connected to a mobile communication device or a power supply, and the time sequence of the first connection port 20 and the second connection port 30 connected to the mobile communication device or the power adapter.

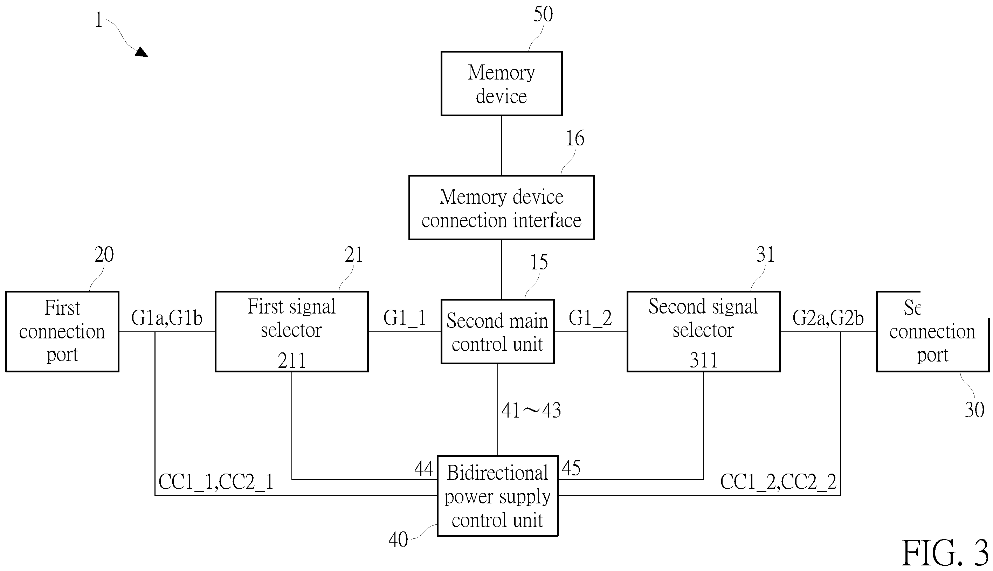

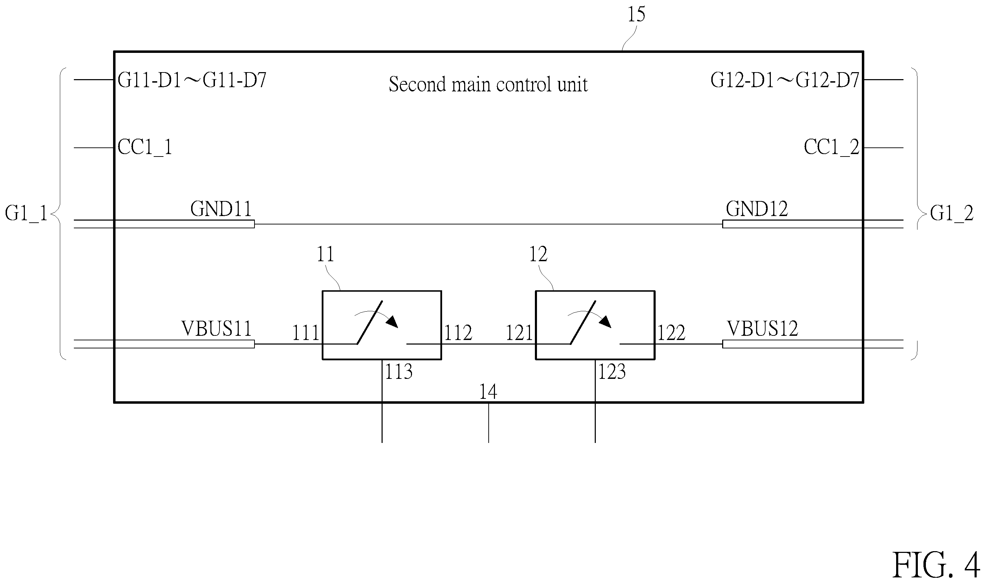

Please refer to Figures 3 and 4. Figure 3 is a functional block diagram of another embodiment of the bidirectional blind-mate power supply with data transmission device 1 of the present invention. Figure 4 is a functional block diagram of a second main control unit 15 of the bidirectional blind-mate power supply with data transmission device 1 of the present invention. Wherein the first connection port 20 has a pair of 12-pin USB TYPE-C sub-ports: first sub-ports G1a and G1b, the second connection port 30 has a pair of 12-pin USB TYPE-C sub-ports: second sub-ports G2a and G2b, and compared with the first main control unit 10 in FIG. 2 , the second main control unit 15 in FIG. 4 only has a left first sub-port G1_1 and a right first sub-port G1_2, both of which are 12-pin USB TYPE-C connection sub-ports. In this embodiment, the bidirectional blind-mate power supply with data transmission device 1 of the present invention further comprises a first signal selector 21 and a second signal selector 31 in addition to a second main control unit 15, the memory device connection interface 16, the first connection port 20, the second connection port 30, and the bidirectional power supply control unit 40. Wherein the differences between the second main control unit 15 and the first main control unit 10 are that the first main control unit 10 can be directly connected to the 24-pin USB TYPE-C connection ports of the first connection port 20 and the second connection port 30 respectively, while the second main control unit 15 cannot be directly connected to the 24-pin USB TYPE-C connection ports of the first connection port 20 and the second connection port 30. The second main control unit 15 must connect to a 12-pin USB Type-C sub-port of the 24-pin USB Type-C connection port of the first connection port 20, as well as to a 12-pin USB Type-C sub-port of the 24-pin USB Type-C connection port of the second connection port 30, via the first and second signal selectors 21, 31, respectively. The first signal selector 21 is located between the two of the second main control unit 15 and the first connection port 20 and the first signal selector 21 is connected to the two respectively. The first signal selector 21 has a selection control pin 211 which is connected to a selection pin 44 of the bidirectional power supply control unit 40. Consequently, the bidirectional power supply control unit 40 can control the connection of the left first sub-port G1_1 of the second main control unit 15 to either the first sub-ports G1a or G1b of the first connection port 20 via the selection pin 44 and the selection control pin 211; similarly, the second signal selector 31 is located between the two of the second main control unit 15 and the second connection port 30, and the second signal selector 31 is connected to the two respectively. The second signal selector 31 has a selection control pin 311 which is connected to another selection pin 45 of the bidirectional power supply control unit 40. Consequently, the bidirectional power supply control unit 40 can control the connection of the right first sub-port G1_2 of the second main control unit 15 to either the second sub-ports G2a or G2b of the second connection port 30 via the selection pin 45 and the selection control pin 311.

As described above, the bidirectional power supply control unit 40 determines how to control the output of the first control signal pin 41, the output of the second control signal pin 42, and the output of the timing sequence signal pin 43 based on the configuration channel signals CC1_1, CC2_1 provided by the first connection port 20 and the configuration channel signals CC1_2, CC2_2 provided by the second connection port 30.

In one embodiment, the first signal selector 21 and the second signal selector 31 are both multiplexers. In one embodiment, the first signal selector 21 and the second signal selector 31 are both multiplexers composed of relays.

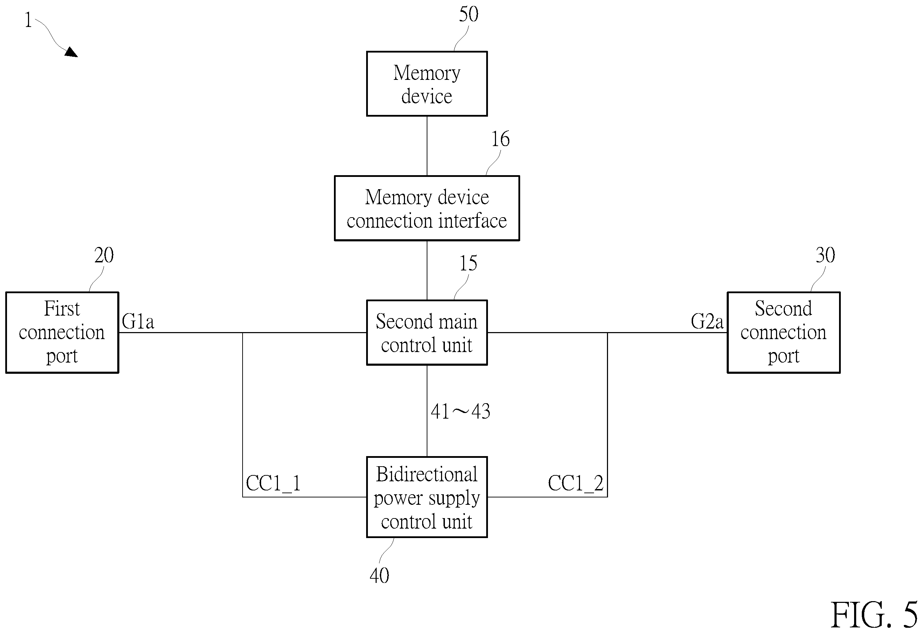

Please refer to FIG. 4 and FIG. 5. FIG. 5 is a functional block diagram of yet another embodiment of a bidirectional blind-mate power supply with data transmission device 1 of the present invention. Wherein, the first connection port 20 only has a first sub-port G1a of a 12-pin USB TYPE-C, and the second connection port 30 also only has a second sub-port G2a of a 12-pin USB TYPE-C. In this embodiment, the bidirectional blind-mate power supply with data transmission device 1 of the present invention comprises: the second main control unit 15, the memory device connection interface 16, the first sub-port G1a, the second sub-port G2a, and the bidirectional power supply control unit 40; the second main control unit 15 is directly connected to the memory device connection interface 16, the first sub-port G1a of the first connection port 20, and the second sub-port G2a of the second connection port 30, respectively.

As described above, the bidirectional power supply control unit 40 determines how to control the output of the first control signal pin 41, the output of the second control signal pin 42, and the output of the timing sequence signal pin 43 based on the configuration channel signal CC1_1 provided by the first connection port 20 and the configuration channel signal CC1_2 provided by the second connection port 30.

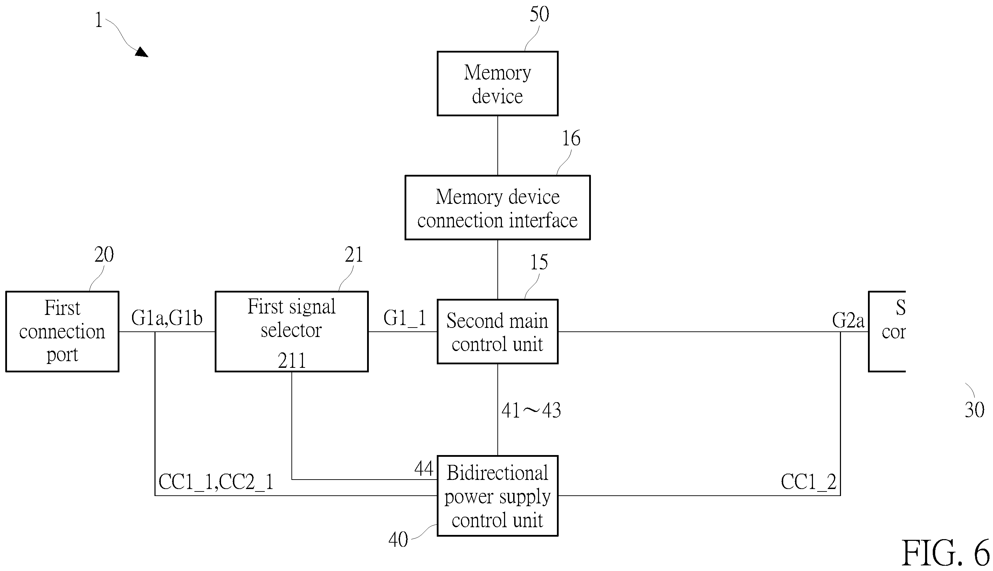

The above embodiments are all about symmetrical arrangements of the first connection port 20 and the second connection port 30, for example, the first connection port 20 and the second connection port 30 both have a pair of 12-pin USB TYPE-C connection sub-ports, or the first connection port 20 and the second connection port 30 both have only one 12-pin USB TYPE-C connection sub-port; the following embodiments are about the asymmetrical arrangements of the first connection port 20 and the second connection port 30, for example, the first connection port 20 has a pair of 12-pin USB TYPE-C connection sub-ports and the second connection port 30 has only one 12-pin USB TYPE-C connection sub-port. Please refer to FIG. 6, which is a functional block diagram of still another embodiment of the bidirectional blind-mate power supply with data transmission device 1 of the present invention, wherein the first connection port 20 has a pair of 12-pin USB TYPE-C first sub-ports G1a and G1b, and the second connection port 30 has only a 12-pin USB TYPE-C sub-port G2a. Compared to FIG. 3, in this embodiment, in addition to the second main control unit 15, the memory device connection interface 16, the first sub-port G1a, the first signal selector 21, the second sub-port G2a, and the bidirectional power supply control unit 40, the second main control unit 15 is directly connected to the only 12-pin USB TYPE-C sub-port G2a of the second connection port 30, and the connections between the first signal selector 21 and the three of the second main control unit 15, the first connection port 20, and the bidirectional power supply control unit 40 are same as those shown in FIG. 3, wherein the bidirectional power supply control unit 40 can selectively control the connection of the left first sub-port G1_1 of the second main control unit 15 to either the first sub-ports G1a or G1b in the first connection port 20 via the selection pin 44 and the selection control pin 211.

As described above, the bidirectional power supply control unit 40 determines how to control the output of the first control signal pin 41, the output of the second control signal pin 42, and the output of the timing sequence signal pin 43 based on the configuration channel signals CC1_1 and CC2_1 provided by the first connection port 20 and the configuration channel signal CC1_2 provided by the second connection port 30.

As for a configuration that the first connection port 20 has only one 12-pin USB TYPE-C connection sub-port and the second connection port 30 has a pair of 12-pin USB TYPE-C connection sub-ports, since it is only the left and right reversal of the above-mentioned embodiment, without loss of generality, there is no need to further describe the configuration that the first connection port 20 has only one 12-pin USB TYPE-C connection sub-port and the second connection port 30 has a pair of 12-pin USB TYPE-C connection sub-ports. That is, the above-mentioned embodiment that the first connection port 20 has a pair of 12-pin USB TYPE-C connection sub-ports and the second connection port 30 has only one 12-pin USB TYPE-C connection sub-port is sufficient to substantially cover the configuration that the first connection port 20 has only one 12-pin USB TYPE-C connection sub-port and the second connection port 30 has a pair of 12-pin USB TYPE-C connection sub-ports.

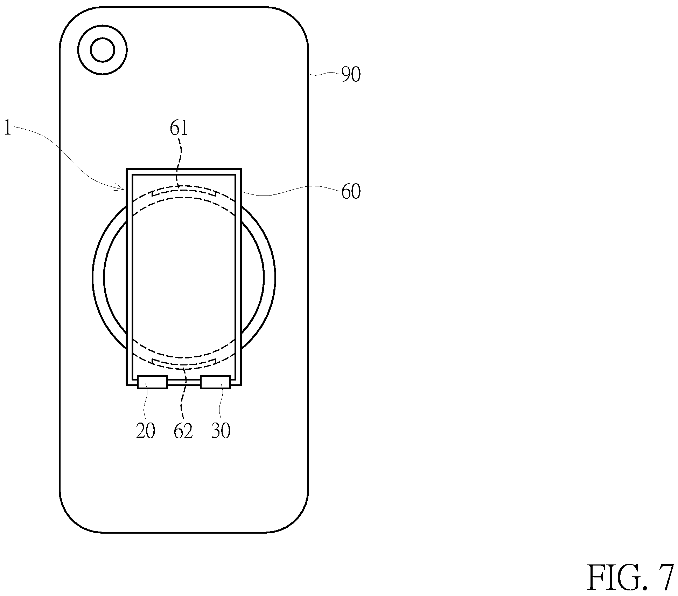

Please refer to FIG. 7, which is a schematic diagram of the bidirectional blind-mate power supply with data transmission device 1 of the present invention combined with a mobile phone 90. The bidirectional blind-mate power supply with data transmission device 1 of the present invention further comprises a case 60, wherein the first main control unit 10 or the second main control unit 15, the memory device connection interface 16, the first connection port 20, the second connection port 30, the bidirectional power supply control unit 40, the memory device 50, as well as the first signal selector 21 and the second signal selector 31 are all arranged in an inner space of the case 60, wherein the first connection port 20 and the second connection port 30 are also exposed at an edge of the case 60, so that an external mobile communication device or a power supply can be connected to the bidirectional blind-mate power supply with data transmission device 1 of the present invention, and permanent magnets 61, 62 are further arranged on a lower surface of the case 60, so as to magnetically attract the bidirectional blind-mate power supply with data transmission device 1 of the present invention to a back side of the mobile phone 90. In one embodiment, a common contour of the permanent magnets 61, 62 forms a part of a circular ring.

In one embodiment, the combination of the first main control unit 10 and the bidirectional power supply control unit 40 can be referred to as a controller of the bidirectional blind-mate power supply with data transmission device 1, and the first main control unit 10 and the bidirectional power supply control unit 40 can be integrated into a chip; similarly, in one embodiment, the combination of the second main control unit 15 and the bidirectional power supply control unit 40 can also be referred to as a controller of the bidirectional blind-mate power supply with data transmission device 1, and the controller formed by the combination of the second main control unit 15 and the bidirectional power supply control unit 40 can be integrated into a chip. In one embodiment, the memory device connection interface 16 can be a part of the first main control unit 10 or the second main control unit 15.

Although the present invention has been disclosed as above by way of a preferred embodiment, it is not intended to limit the present invention, and any one skilled in the art may make certain changes and modifications without departing from the spirit and scope of the present invention, and therefore the scope of protection of the present invention shall be subject to the scope of the appended patent claims as defined herein.

## Claims

1. A bidirectional blind-mate power supply with data transmission device, comprising:
a first connection port (20), the first connection port (20) having a pair of first sub-ports (G1_1, G2_1);
a second connection port (30), the second connection port (30) having a pair of second sub-ports (G1_2, G2_2);
a memory device connection interface (16);
a first main control unit (10), connected to the first connection port (20), the second connection port (30), and the memory device connection interface (16), respectively; and
a bidirectional power supply control unit (40), the bidirectional power supply control unit (40) connected to the first main control unit (10) and configured to receive configuration channel signals (CC1_1, CC2_1) of the first connection port (20) and configuration channel signals (CC1_2, CC2_2) of the second connection port (30) respectively; wherein
when the memory device connection interface (16) is connected to a memory device (50), and the first connection port (20) is connected to either a mobile communication device or a power supply device, and the second connection port (30) is connected to either another mobile communication device or another power supply device, the bidirectional power supply control unit (40) controls the first main control unit (10) according to the configuration channel signals (CC1_1, CC2_1) of the first connection port (20) and the configuration channel signals (CC1_2, CC2_2) of the second connection port (30), so as to control the power supply device to supply power to the memory device (50) and said another mobile communication device, the mobile communication device to access data from the memory device (50) and at the same time said another mobile communication device to supply power to the memory device (50) and the mobile communication device, said another mobile communication device to access data from the memory device (50) and at the same time the mobile communication device to supply power to the memory device (50) and said another mobile communication device, or said another power supply device to supply power to the memory device (50) and the mobile communication device.

2. A bidirectional blind-mate power supply with data transmission device, comprising:
a first connection port (20), the first connection port (20) having a pair of first sub-ports (G1_1, G2_1);
a second connection port (30), the second connection port (30) having a pair of second sub-ports (G1_2, G2_2);
a memory device connection interface (16);
a first main control unit (10), connected to the first connection port (20), the second connection port (30), and the memory device connection interface (16), respectively; and
a bidirectional power supply control unit (40), the bidirectional power supply control unit (40) connected to the first main control unit (10) and configured to receive configuration channel signals (CC1_1, CC2_1) of the first connection port (20) and configuration channel signals (CC1_2, CC2_2) of the second connection port (30) respectively; wherein
when the memory device connection interface (16) is connected to a memory device (50), and only one power supply device is connected to either the first connection port (20) or the second connection port (30), the bidirectional power supply control unit (40) controls the first main control unit (10) based on the configuration channel signals (CC1_1, CC2_1) of the first connection port (20) and the configuration channel signals (CC1_2, CC2_2) of the second connection port (30) to control the power supply device to supply power to the memory device (50).

3. A bidirectional blind-mate power supply with data transmission device, comprising:
a first connection port (20), the first connection port (20) having a pair of first sub-ports;
a second connection port (30), the second connection port (30) having a pair of second sub-ports;
a memory device connection interface (16);
a first main control unit (10), connected to the first connection port (20), the second connection port (30), and the memory device connection interface (16), respectively; and
a bidirectional power supply control unit (40), the bidirectional power supply control unit (40) connected to the first main control unit (10) and configured to receive configuration channel signals (CC1_1, CC2_1) of the first connection port (20) and configuration channel signals (CC1_2, CC2_2) of the second connection port (30) respectively;
when the memory device connection interface (16) is connected to a memory device (50), and only one mobile communication device is connected to either the first connection port (20) or the second connection port (30), the bidirectional power supply control unit (40) controls the first main control unit (10) based on the configuration channel signals (CC1_1, CC2_1) of the first connection port (20) and the configuration channel signals (CC1_2, CC2_2) of the second connection port (30) to control the mobile communication device to supply power to and/or access data from the memory device (50).

4. The bidirectional blind-mate power supply with data transmission device as claimed in any one of claims 1 to 3, wherein
the first main control unit (10) further comprises: a first switch (11) and a second switch (12) connected in series, wherein two ends of the serially connected first and second switches (11, 12) are connected to a power terminal (VBUS 11 & VBUS21) in the first connection port (20) and a power terminal (VBUS12 & VBUS22) in the second connection port (30), respectively;
the bidirectional power supply control unit (40) controls the turn-on of the first switch (11) based on the configuration channel signals (CC1_1, CC2_1) of the first connection port (20), and controls the turn-on of the second switch based on the configuration channel signals (CC1_2, CC2_2) of the second connection port (30).

5. The bidirectional blind-mate power supply with data transmission device as claimed in claim 1, wherein
the bidirectional power supply control unit (40) generates and outputs a port status to the first main control unit (10) according to the configuration channel signals (CC1_1, CC2_1) of the first connection port (20) and the configuration channel signals (CC1_2, CC2_2) of the second connection port (30), wherein the port status includes:
whether the first connection port (20) is connected to the mobile communication device or the power supply device;
whether the second connection port (30) is connected to the mobile communication device or the power supply device; and
a time sequence of the first connection port (20) and the second connection port (30) connected to either the mobile communication device or the power supply device.

6. The bidirectional blind-mate power supply with data transmission device as claimed in any one of claims 1 to 3, wherein
the memory device (50) and the bidirectional blind-mate power supply with data transmission device (1) are both arranged in a case (60), and the first connection port (20) and the second connection port (30) are both exposed on a surface of the case (60); a plurality of permanent magnets (61, 62) are symmetrically arranged on a lower surface of the case (60) and a common contour of the plurality of permanent magnets (61, 62) forms a part of a circular ring.

7. The bidirectional blind-mate power supply with data transmission device as claimed in any one of claims 1 to 3, wherein
the memory device connection interface (16) is part of the first main control unit (10).

8. The bidirectional blind-mate power supply with data transmission device as claimed in any one of claims 1, wherein
when the mobile communication device is connected to the first connection port (20) earlier than said another mobile communication device is connected to the second connection port (30), the mobile communication device supplies power or/and accesses data to the memory device (50), and said another mobile communication device supplies power to the memory device (50) and the mobile communication device;
when said another mobile communication device is connected to the second connection port (30) earlier than the mobile communication device is connected to the first connection port (20), said another mobile communication device supplies power or/and accesses data to the memory device (50), and the mobile communication device supplies power to the memory device (50) and said another mobile communication device.

9. A controller of a bidirectional blind-mate power supply with data transmission device, the controller comprising:
a main control unit, the main control unit being used to connect to a first connection port (20), a second connection port (30), and a memory device connection interface (16);
a bidirectional power supply control unit (40), the bidirectional power supply control unit (40) connected to the main control unit, and the bidirectional power supply control unit (40) being used to receive configuration channel signals of the first connection port (20) and configuration channel signals of the second connection port (30) respectively; wherein
the memory device connection interface (16) is used to connect a memory device (50), the first connection port (20) is used to connect with a mobile communication device or a power supply device, and the second connection port (30) is used to connect with another mobile communication device or another power supply device; wherein
the main control unit also includes: a first switch (11) and a second switch (12) connected in series, the two ends of the first switch (11) and the second switch (12) connected in series are used to connect to a power terminal in the first connection port (20) and a power terminal in the second connection port (30) respectively;
when the first connection port (20) is connected to the mobile communication device or the power supply device, the bidirectional power supply control unit (40) controls the turn-on of the first switch (11) according to the configuration channel signals of the first connection port (20);
when the second connection port (30) is connected to said another mobile communication device or said another power supply device, the bidirectional power supply control unit (40) controls the turn-on of the second switch (12) according to the configuration channel signals of the second connection port (30).

10. The controller of a bidirectional blind-mate power supply with data transmission device as claimed in claim 9, wherein
when the first connection port (20) is the only connection port connected to a mobile communication device or a power supply device, the bidirectional power supply control unit (40) generates and outputs a port status to the main control unit according to the configuration channel signals of the first connection port (20), and the port status includes whether the first connection port (20) is connected to the mobile communication device or the power supply device.

11. The controller of a bidirectional blind-mate power supply with data transmission device as claimed in claim 9, wherein
when the second connection port (30) is the only connection port connected to a mobile communication device or a power supply device, the bidirectional power supply control unit (40) can generate and output a port status to the main control unit according to the configuration channel signals of the second connection port (30), and the port status includes whether the second connection port (30) is connected to the mobile communication device or the power supply device.

12. The controller of a bidirectional blind-mate power supply with data transmission device as claimed in claim 9, wherein
when the first connection port (20) is connected to the mobile communication device or the power supply device, and the second connection port (30) is connected to another mobile communication device or another power supply device, the bidirectional power supply control unit (40) generates and outputs a port status to the main control unit according to the configuration channel signals of the first connection port (20) and the second connection port (30), and the port status includes: whether the first connection port (20) is connected to the mobile communication device or the power supply device, whether the second connection port (30) is connected to said another mobile communication device or said another power supply device, and a time sequence of the time the first connection port (20) connected to the mobile communication device or the power supply device, and the time the second connection port (30) connected to said another mobile communication device or said another power supply device.

13. The controller of a bidirectional blind-mate power supply with data transmission device as claimed in claim 9, wherein
the main control unit and the bidirectional power supply control unit (40) are integrated into one chip.

14. The controller of a bidirectional blind-mate power supply with data transmission device as claimed in claim 9, wherein
the memory device connection interface (16) is a part of the main control unit.
